# EUROPEAN PATENT SPECIFICATION

(11) **EP 1 073 031 B1**
(45) Date of publication and mention of the grant of the patent: **30.07.2008**
(21) Application number: 00115713.0
(22) Date of filing: 21.07.2000
(51) Int. Cl.: G09F 3/02, G09F 3/04, B60C 13/00

(54) **Permanent tamper resistant bar code labels for tires**
Permanente fälschungsichere Streifencode-Etiketten für Reifen
Etiquettes à codes barres infalsifiables permanentes pour pneus

(30) Priority: 30.07.1999 US 365095
(43) Date of publication of application: 31.01.2001
(73) Proprietor: THE GOODYEAR TIRE & RUBBER COMPANY, Akron, OH 44316-0001 (US)
(72) Inventor: Majumdar, Ramendra Nath, Hudson, Ohio 44236 (US); VanGelderen, Gerrit Johan, Wadsworth, Ohio 44281 (US); Nicola, Bruce Edward, North Canton, Ohio 44721 (US); Tipton, Marvin Wayne, Akron, Ohio 44312 (US)
(74) Representative: Kutsch, Bernd

(56) References cited:
- EP-A- 0 604 819
- EP-A- 0 841 650
- US-A- 5 380 391
- US-A- 5 709 918
- US-A- 5 834 530
- PATENT ABSTRACTS OF JAPAN vol. 010, no. 033 (M-452), 8 February 1986 (1986-02-08) & JP 60 187539 A (KAWATSUNE SHIYOUTEN:KK), 25 September 1985 (1985-09-25)

## Description

### Field Of Invention

Bar code labels that can be electronically scanned and read with a bar code scanner are disclosed for pneumatic tires. The bar code is applied to a contrasting colored transferable rubber label which is then adhered to a green tire. The green tire is then cured in a tire press. During curing, the label is bonded to the tire. The bar codes do not peel from the cured tire since the rubber of the label is compatible with the rubber of the tire and is bonded thereto during curing of the tire.

### Background of The Invention

It would be desirable to have permanent bar codes affixed to pneumatic tires as a means of identifying the particular tire or provide certain manufacturing data about the tire. Traditional polyester-based bar code labels, which have a high modulus, cannot stretch as much as the tire sidewall during tire inflation and flexing of the tire sidewall. This creates interfacial tension between the polyester and the tire that generally results in a failure of the bond between the polyester label and the tire.

The use of white rubber compounds on tires (e.g. tire whitewall compounds) has generally been limited to technology where the white sidewall rubber compound is encased in a black rubber composition, which is then built into the tire. Subsequent to tire building and curing the black rubber composition encasing, the black rubber compound is selectively ground away in areas where it is desired to have white rubber (e.g. the whitewall) thereby exposing the underlying white rubber.

Various patents and publications disclose alternative ways to affix light colored rubber articles to carbon black-filled pneumatic tires. Other patents and publications disclose various ways to affix identifying bar codes to tires. Problems with rubber bar codes include rubber flow distorting the bar code so it is no longer readable, problems with the label becoming detached and problems with the interface between the label and the tire being a failure site. The tire building industry has not identified a commercially viable way to apply a permanent tamper resistant two-dimensional bar code to identify tires both during manufacturing and during consumer use.

US-A-5,834,530 describes a plate-shaped rubber member having a surface with markings wherein the rubber member includes a pre-crosslinked layer below its surface in the area of the markings. The marking can be a bar code and the rubber member with the markings can be attached to a green tire before curing. The crosslinking is performed using electromagnetic or electron beam radiation after applying the markings to the surface of the rubber member.

EP-A-0 841 650 discloses a display label and a method for forming a display label which can be attached to a sidewall of a tire. The display label can include a bar code and comprises a rubber base material layer, a display layer and a protective layer. The display layer is formed by disposing an ink on the surface of the rubber base layer before applying the protective layer on top. A similar display label and method is also known from JP-A-60-187539.

### Summary Of The Invention

A process according to claim 1 and a bar code label for a tire according to claim 8 has been created to put a commercially viable bar code identifier on pneumatic tires. While somewhat lengthy, the process is very easy to implement and avoids many of the defects of prior art processes.

A light colored rubber transfer label is prepared from a crosslinkable (e.g. unsaturated) hydrocarbon rubber, light colored pigment, and other rubber compounding ingredients. A mirror image bar code (printed right to left) is applied to a smooth film e.g. polyester. The bar code is characterized as heat transferable to a hydrocarbon rubber. The bar code on the film is affixed to the rubber transfer label. At this point the rubber transfer label can be cured or uncured. If the label is uncured, it is cured as part of the thermal transfer of the bar code from the film. If the label has already been cured in a separate step, then it may be further cured during the thermal transfer of the bar code.

Curing of the rubber transfer label can be brought about by various procedures wherein the rubber is put in an appropriate shape and heated for 1 to 120 minutes to a temperature from 80°C to 160°C. It is desirable that the rubber of the label be cured to at least 50, 60, or 70 percent of its maximum cure (modulus) as determined by a Mooney cure meter.

For the thermal transfer to be effective, the surface of the film with the bar code thereon has to be in physical contact with the rubber label. The film is not generally removed immediately after the thermal transfer, but is rather left on the label to protect the surface from contamination and possibly minimize any further flow of the rubber of the label during processing at elevated temperatures. If the film is transparent, a bar code reader can read the label at this stage, facilitating in process monitoring of the labels and any tires to which the labels are subsequently attached.

After the transfer of the bar code to the rubber label and the curing of the rubber label, a pressure sensitive adhesive desirably on a release liner is applied to the label on the surface opposite the bar code. Desirably the adhesive is a rubber-based adhesive as described for tread splicing and retreading of tires. Desirably the adhesive is applied in small discrete portions to the label so that the adhesive only covers less than 30 percent, less than 20 percent or less than 10 percent of the bottom surface of the label. Desirably the adhesive is in one or more discrete portions and is applied as a solventless adhesive. Desirably the adhesive thickness is from 0.001 to 0.050 inches (0,0025 to 0,13 cm). A simple way to apply the adhesive is to adhere the adhesive to a release backing and then apply the label or groups of labels over the adhesive on the release backing. The labels can be trimmed or die cut after affixing to the release backing to form more uniform or decorative shapes in the final label. It is anticipated that these labels will adhere to the tire for the life of the tire and the bar codes will remain readable.

The label can then be applied to pneumatic tires. While the labels can be applied anywhere on the tires, it is desirable to apply them on the interior or exterior of the sidewalls where there is minimum abrasion. The labels can be in the form of shaped appliques that have a pleasing appearance while carrying the identifying bar code information. The appliques can have various shapes (outlines) other than circles, ellipse, rectangle or other parallelogram. Such shapes include images of plants, animals, people, and articles such as cars, chairs, logos, etc. The adhesive is necessary to secure the labels on the tire if sufficient tackiness is not present on the green tire to hold the label securely to the tire.

After affixing the label to the green tire, the tire is cured (crosslinked) in a tire curing press or the equivalent. The film on the label can remain on the label during this step and may help to avoid contamination of the label surface. After curing, the film can be removed from the bar code label or left in place. If the film is transparent, the bar code can be read without removing the film. If the tire needs painting after cure, the transparent film should be removed after paint application.

It has been observed that the bar codes applied with this process have been easily readable by a scanner after inflating the tire multiple times and using the tire. This was unexpected as the low modulus of the labels opened the possibility of the labels stretching which might have changed the spacing between the bars of the bar code. The interface between the tire and the label has not been a site for failure or cracking of the tire. The labels have been tamper resistant in that they can be cut off of the tire but this leaves knife marks on both the tire and the label, thereby, hampering reuse of the label or the application of an alternate label to the tire.

### Brief Description Of The Drawing

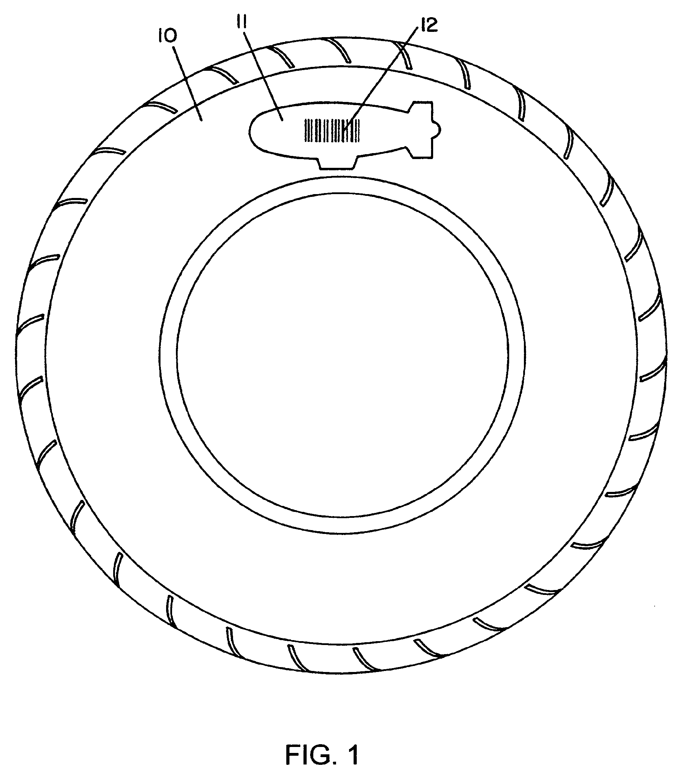

Fig. 1 shows a sideview of a tire 10 with a label 11 bearing a bar code 12.

### Detailed Description Of The Invention

A process has been created to put a commercially viable bar code identifier on pneumatic tires. While somewhat lengthy, the process is very easy to implement and avoids many of the defects of prior art processes. Those defects include labels that fall off, labels that are unsightly due to contamination with black rubber compounds or misalignment during manufacturing, labels that are no longer readable, labels that are easily removed and reapplied to other tires, and labels that nucleate failure or cracks in a tire.

Generally a light colored rubber transfer label is prepared from a crosslinkable (e.g. unsaturated) hydrocarbon rubber, light colored pigment, crosslinking agent and other rubber compounding ingredients. Titanium dioxide pigments are preferred pigments and are desirably present in an amount of at least 10 phr (parts by weight per 100 parts by weight of rubber) in the label composition. One potential material for the label is a tire whitewall compound. These usually include an isobutylene polymer, natural rubber and optionally EPDM rubber along with curatives, pigments, etc. Alternatively, a white rubber composition can be made based primarily on natural rubber as the rubber component. The label will be defined as a non-black rubber meaning that it does not have a significant amount of carbon black e.g. less than 10 phr and does not appear to be dark gray or black. Alternatively, if a light colored thermally transferable ink is available, a dark colored or even black rubber transfer label can be used. A crosslinkable rubber will be defined as a rubber along with its crosslinking agent that can be cured under conditions found in a conventional tire cure press.

A mirror image bar code (printed right to left) is applied to a smooth film e.g. polyester. The smooth film only acts as a carrier or support for the initial bar code image. Later in the process it acts as a protective layer for the newly-formed bar code label until after the tire is cured. The material of the smooth film can be a thermoplastic, e.g. polyester, thermoset or other material. Desirably the film has a high modulus at 5% elongation such as of at least 2 or 5 MPa. The ink used to form the bar code image is desirably transferable from the film to the crosslinkable rubber of the label. Thus, it is desirably that the film not absorb or imbibe the ink preventing a subsequent transfer. The bar code is characterized as heat transferable to the hydrocarbon rubber of the label. The ink is desirably thermally stable such that it does not degrade at the cure temperature for a tire. Desirably the ink is thermally transferred at a temperature above 50°C, more desirably above 80°C, and preferably above 100°C. Thus, the binder for the ink desirably converts from a high viscosity liquid below these transfer temperatures to a low viscosity liquid (readily transferable and capable of migrating into the rubber) above these temperatures. The ink may include dyes and/or pigments. The important criteria for the ink are that it transfers as a sharp clear image to the rubber and that it is stable to thermal changes on tire curing and aging. Desirably it is a rubber-based ink and partially penetrates the label so that surface scratches do not affect its readability.

After the bar code on the film is prepared and the label is initially shaped from the light colored rubber composition, the bar code on the film is affixed to the rubber (transfer) label. At this point the rubber transfer label can be cured or uncured and may have dimensions different from its final dimensions (e.g. thicker and/or having greater width or length). If the label is uncured when the bar code and film are attached, it is at least partially cured as part of the thermal transfer of the bar code from the film. If the label has already been cured in a separate step, then it may be further cured during the thermal transfer of the bar code.

Curing of the rubber transfer label can be brought about by various procedures wherein the rubber is put in an appropriate shape and heated for 1 to 120 minutes to a temperature from 80°C to 160°C. It is desirable that the rubber of the label be cured prior to or concurrently with the thermal transfer of the bar code to at least 50, 60, or 70 percent of its maximum cure as determined by a Mooney cure meter for the rubber composition of the transfer label.

For the thermal transfer to be effective, the surface of the film with the bar code thereon has to be in physical contact with the rubber label. The bar code which was initially read from right to left on the film is inverted on the rubber label so that it reads from left to right on the rubber label. The film is not generally removed immediately after the thermal transfer, but is rather left on the label to protect the surface from contamination and possibly minimize any further flow of the rubber of the label during processing at elevated temperatures. Since rubbers are high viscosity liquids their flow is minimized when in direct contact with a solid surface like a film. If the film is transparent, a bar code reader can read the label at this stage, facilitating in process monitoring of the labels and any tires to which the labels are subsequently attached.

Either in a separate step from transferring the bar code from the film or simultaneous thereto, the rubber of the rubber transfer label is cured (crosslinked). Desirably this curing at this stage occurs to the extent of at least 50, 60 or 70 % of the maximum Mooney modulus on Mooney cure meter (or its equivalent) for the rubber compound. Thus, the resistance to flow of the rubber is significantly increased so that in subsequent steps in the tire cure press the rubber of the label and the image of the bar code thereon do not flow to the extent that the bar code becomes unreadable. Even though the label is partially or fully cured, some crosslink sites remain in the rubber and will chemically bond to the tire during the cure of the green tire in the tire cure press. Chemical bonds will extend from the tire to the label and from the label to the tire. The amount and type of curative in the label can be optimized to control the final crosslink density and modulus of the rubber of the label. Desirably the rubber of the label ends up with a modulus of from 0.02 to 1 MPa at 5 percent elongation. Desirably the thickness of the rubber portion of the final label (less adhesive) is from 0.005 to 0.050 inches (0,013 to 0,13 cm) and more desirably from 0.005 to 0.20 or 0.30 inches (0,013 to 0,05 or 0,076 cm). These fairly thin labels have good integrity due to their tendency to chemically bond to the tire. As they are very thin, they do not displace a significant amount of the rubber of the tire nor do they significantly weaken the tire at their point of attachment.

After the transfer of the bar code to the rubber label and the curing of the rubber label, a pressure sensitive adhesive optionally on a release liner is applied to the label on the surface opposite the bar code. Desirably the adhesive is a rubber-based adhesive as described for tread splicing and retreading of tires although other adhesives are functional in this application. Desirably the adhesive is applied in small, discrete portions to the label so that the adhesive only covers less than 30 percent, less than 20 percent or less than 10 percent of the bottom surface of the label (opposite the side where the bar code was applied). Desirably the adhesive is in one or more discrete portions and preferably in two or more discrete portions per label. Desirably it is applied as a solventless adhesive. Desirably the adhesive thickness is from 0.001 to 0.050 inches (0,0025 to 0,13 cm). A simple way to apply the adhesive is to adhere the adhesive to a release backing and then apply the label or groups of labels over the adhesive on the release backing. The labels can be trimmed or die cut after affixing to the release backing to form more uniform or decorative shapes in the final label. The labels with the release backing can be rolled up and stored for later use. If the labels are die cut after being affixed to the release backing, the scrap rubber cut from the label can be left on the release backing. This can facilitate the isolation of the usable and non-usable part of the product. The adhesive is specified for the labels because some of the tires will not have sufficient green tack to hold the labels securely in the selected location until the tire is put in the mold and fully cured. Rather than have some labels with adhesive and others without, adhesive is advantageously applied to all the labels. It is anticipated that these labels will adhere to the tire for the life of the tire and the bar codes will remain readable.

The label can then be applied to pneumatic tires. While the bar code label can be applied anywhere on the tires, it is desirable to apply them on the interior or exterior of the sidewalls (rather than the tread region) where there is minimum abrasion. The labels can be in the form of appliques that have a pleasing appearance while carrying the identifying bar code information. It is anticipated that the labels will be better adhered due to the fact that many cured rubber compositions adhere to uncured rubber compositions better if there is no intervening adhesive. The adhesive is necessary to secure the labels on the tire if sufficient tackiness is not present on the green tire to hold the label securely to the tire.

After affixing the label to the green tire, the tire is cured (crosslinked) in a tire curing press or the equivalent. Curing of green tire can be brought about by various procedures in a tire press; wherein the rubber is put in an appropriate shape and heated for 1 to 120 minutes to a temperature from 80°C to 160°C. It is desirable that the rubber of the label be cured to at least 70, 80, or 90 percent of its maximum torque as determined by a Mooney cure meter for the rubber compositions of the tire.

The film on the label can remain on the label during this step and may help minimize rubber flow on the surface of the label and avoid contamination of the label surface. After curing, the film can be removed from the bar code label or left in place. If the film is transparent, the bar code can be read without removing the film. At some stage after tire curing it is probably desirable to remove the protective film from the bar code.

It has been observed that the bar codes applied with this process have been easily readable by a scanner after inflating the tire multiple times and using the tire. This was unexpected as the low modulus of the labels opened the possibility of the labels stretching which might have changed the spacing between the bars of the bar code. The interface between the tire and the label has not been a site for failure or cracking of the tire. The labels have been tamper resistant in that they can be cut off the tire but this leaves knife marks on both the tire and the label, thereby, hampering reuse of the label or the application of an alternate label to the tire. Label removal also weakens a tire surface and premature failure there may occur.

The bar codes of this process are useful to identify rubber goods such as tires where the rubber goods are anticipated to stretch during use or installation, and this stretching causes failure of conventional bar codes. Specific applications include in-process identification during tire manufacturing processes, identifying specific tires that are approved for use in car races, and identifying tires by reading their bar codes so that their retreading history or ownership history can be known or confirmed.

### Experimental

An initial screening test was run to determine the deficiencies of the available bar code labels. One problem was that the labels were not thought to be tamper resistant. An adhesion test was developed. It comprised a) attaching a label to a tire sidewall substrate and curing the sidewall substrate in a mold with the label attached, b) using a knife to cut underneath a corner of a bar code label, and c) attempting to lift the bar code off the sidewall by that corner. The results were either 1) Unacceptable - the label can be removed without disintegrating, 2) Acceptable - the label cannot be removed without disintegrating, and 3) Tamperproof - the label cannot be lifted without damaging the test piece.

A loss of the labels from the tire was a frequent problem. A test was devised in which the sidewall was stretched a number of cycles and the readability of the label was thereafter evaluated. A tire sidewall compound 100 mil (0,25 cm) thick and 3 x 7.9 inches square (7.6 x 20 cm) was used as the substrate. Three adjacent bar code labels were placed on each substrate. The laminate was cured in a mold for 24 minutes at 320°F (160°C) under 20 tons (about 89 kN) platen pressure. The substrate was cut to yield three samples, each 1 inch (2.54 cm) wide with a bar code centered in the 1 inch (2.54 cm) strip. These 1 inch (2.54 cm) strips were stretched from zero to 20% to zero on a cyclic basis at a rate of 200 cycles per minute for 3 hours. To pass the test, the bar code must be readable in a bar code scanner after the test and even a fraction of the bar code label should not separate from rubber where it is attached.

The results are shown in the following Table 1.

**Table 1**

| **Label** | **Label Material** | **Supplier** | **Adhesion** | **Readability** |
|---|---|---|---|---|
| **First Rubber Sidewall Composition** | | | | |
| | Polyester | Computype | acceptable | passed |
| F103 | Polyester | Filmquest,Inc. | unacceptable | failed |
| F103 | Polyester | Filmquest | unacceptable | failed |
| F103A | Polyester | American Coated Products | acceptable | passed |
| F103B | Polyester | same | acceptable | passed |
| F103C | Polyester | same | acceptable | passed |
| Exp 1 | Rubber | present invention | tamper resistant | not tested |

| **Second Rubber Sidewall Composition** | | | | |
|---|---|---|---|---|
| | Polyester | Computype | acceptable | failed |
| | Polyester | Brady | unacceptable | not tested |
| F103C | Polyester | American Coated Products | acceptable | failed |
| Exp'1 | Rubber | present invention | tamper proof | passed |

Computype is located in St. Peters, Missouri, USA and its polyester film is identified as "Data2". Filmquest, Inc. is located in St. Charles, Illinois, USA. American Coated Products is located in Indianapolis , Indiana, USA. Brady is located at Menomonee Falls, Wisconsin, USA.

Several of the polyester based-labels (supplied by Computype and American Coated Products) had acceptable performance in the adhesion test and passed the Readability test with the first rubber sidewall composition. Several of these labels were retested with a second rubber sidewall composition. While these polyester-based labels applied to the second rubber sidewall composition were acceptable in the Adhesion test, they failed to remain attached to the tire in the Readability test and, therefore, failed the Readability test. Fourier transformed infrared analysis (FTIR) of the surfaces of the sidewalls and the label indicated that the mode of failure of the bond between the sidewall and the label with the first rubber sidewall composition was fracture within the adhesive layer. FTIR analysis of the surfaces from the second sidewall rubber composition indicated that failure occurred between the adhesive and the polyester leaving an adhesive residue only on the rubber sidewall composition. Thus, something in the second rubber sidewall composition may have caused failure of the adhesive between the polyester layer and the adhesive. Based on this analysis, it is anticipated that none of the polyester-based bar code label would pass the adhesion test with the second rubber sidewall composition.

The rubber bar code label of the present invention was the only bar code to pass the readability test with both sidewall rubber compounds and also be tamper proof in the Adhesion test with both of the sidewall rubber compounds.

As white rubber compositions are sometimes stained by antioxidants or oils in tire sidewalls, the rubber labels of the present invention were tested in an accelerated contact staining of white rubber goods. The test involved placing black sidewall rubber composition on the top of the bar code (after transparent film removal) followed by a 1 lb. (454 g) weight. It was heated in an oven for 3 days at 160°F (71°C). Then the top black sidewall rubber composition and weight were removed and the bar code was exposed for 2 hours under UV light. Even though the white rubber labels were only 12.5 mils (0,31 mm) thick, the staining was only trace and did not affect readability of the bar codes.

The modulus of the control polyester and experimental rubber labels was also measured. The polyester had 5% modulus of 12 MPa and an elongation at break of 80-90%. The rubber had a 5% modulus of 0.2 or 0.3 MPa and an elongation at break of 600%.

## Claims

1. A process of attaching a label (11) having a machine readable bar code (12) to a tire (10), the process comprising:
a) printing a mirror image right to left of a machine readable bar code on a smooth film with a rubber based ink, the ink being heat transferable from said smooth film to a crosslinkable hydrocarbon rubber,
b) preparing a crosslinkable hydrocarbon rubber transfer label,
c) after steps a and b, affixing said mirror image bar code and said smooth film to one face surface of said rubber transfer label,
d) crosslinking the hydrocarbon rubber of said rubber transfer label so that its Mooney torque is at least 50 percent of the maximum torque of the compound in the Mooney curemeter plot,
e) transferring with heat and transposing said mirror image right to left bar code onto said rubber transfer label forming a crosslinked rubber transfer having a left to right machine readable bar code thereon and said film on top of said bar code, either
1) after affixing said rubber transfer label to said mirror image bar code and in the same step as crosslinking the hydrocarbon rubber of said transfer label or
2) after affixing said hydrocarbon rubber transfer to said mirror image bar code in a separate step subsequent to crosslinking said hydrocarbon rubber,
f) after the crosslinking step and the transferring step of the bar code, affixing a pressure-sensitive adhesive portion to a face surface of said rubber transfer label, wherein the face to which said adhesive is affixed is opposite the face where the bar code is transferred,
g) after affixing said adhesive, affixing, via said adhesive, said hydrocarbon rubber transfer label with bar code and said film thereon to a surface of a green tire and
h) curing said green tire in a tire curing press.

2. The process of claim 1 wherein in step f) as pressure-sensitive adhesive portion two or more discontinuous heat curable hydrocarbon rubber-based adhesive portions having a thickness from 0.0025 to 0.13 cm are affixed to said face surface of said rubber transfer label.

3. The process of claim 1 or 2 further comprising the step of removing said film from said crosslinked rubber transfer label.

4. The process of claim 1, 2 or 3 **characterized in that** said adhesive is affixed by applying the adhesive on a release backing to the face of said hydrocarbon rubber transfer label opposite said bar code, and wherein said release backing is separated from said crosslinked rubber transfer prior to applying said transfer to a green tire.

5. The process according to any of the preceding claims **characterized in that** said one or more discontinuous heat curable hydrocarbon rubber-based adhesive portions is at least two portions per label.

6. The process according to claim 1 wherein said rubber transfer label is of a non-black rubber.

7. The process according to claim 1 wherein said smooth film is a polyester film.

8. A bar code label (11) for a tire (10), the label being not yet attached to the tire (10), wherein the label (11) comprises:
a) a crosslinked hydrocarbon rubber layer having a thickness from 0.013 to 0.13 cm and a modulus at 5% strain from 0.02 to 1 MPa,
b) a thermally-transferred machine readable bar code of contrasting color on the top surface of the crosslinked hydrocarbon rubber layer,
c) a pressure-sensitive adhesive on the bottom surface of said crosslinked hydrocarbon rubber layer, and
d) a removable or self detachable during use smooth film covering the top surface of said crosslinked hydrocarbon rubber layer and said bar code, wherein the side of said film facing the top surface of said crosslinked hydrocarbon rubber layer has been preprinted using a rubber-based ink with a mirror image of said bar code which is then thermally-transferred to form said machine readable bar code.

9. The label of claim 8 further comprising a release backing.

10. The label of claim 9 wherein said adhesive is a thermally-crosslinkable hydrocarbon rubber-based adhesive which is located between said release backing and said crosslinked hydrocarbon rubber layer.

11. The label of claim 8 comprising at least 10 phr of a titanium dioxide based pigment.

12. The label according to claim 8 wherein the rubber-based ink has partially penetrated the top surface of the crosslinked hydrocarbon rubber layer.

13. The label according to claim 8 or 10 wherein said adhesive is applied in small discrete portions to the bottom surface of said crosslinked hydrocarbon rubber layer so that the adhesive only covers less than 30 percent of the bottom surface.

## Patentansprüche

1. Verfahren zum Anbringen eines Etiketts (11) mit einem maschinenlesbaren Barcode (12) an einen Reifen (10), wobei das Verfahren umfasst:
a) Drucken von rechts nach links eines Spiegelbilds eines maschinenlesbaren Barcodes auf einen glatten Film mit einer Tinte auf Basis von Kautschuk, wobei die Tinte von dem glatten Film auf einen vernetzbaren Kohlenwasserstoffkautschuk transferierbar ist,
b) Herstellen eines vernetzbaren Kohlenwasserstoffkautschuk-Transferetiketts,
c) Aufbringen des Spiegelbild-Barcodes und des glatten Films auf eine Stirnfläche des Kautschuk-Transferetiketts nach den Schritten a) und b),
d) Vernetzen des Kohlenwasserstoffkautschuks des Kautschuk-Transferetiketts, so dass dessen Mooney-Drehmoment wenigstens 50 Prozent des maximalen Drehmoments der Verbindung in dem Mooney-Vulkameter-Diagramm beträgt,
e) Überführen des von rechts nach links verlaufenden Spiegelbild-Barcodes mit Wärme und Aufbringen dieses Spiegelbild-Barcodes auf das Kautschuk-Transferetikett unter Ausbildung eines vernetzten Kautschuk-Transferetiketts mit einem von links nach rechts verlaufenden maschinenlesbaren Barcode darauf und mit dem Film auf dem Barcode, entweder
1) nach dem Aufbringen des Kautschuk-Transferetiketts auf den Spiegelbild-Barcode und in demselben Schritt wie das Vernetzen des Kohlenwasserstoffkautschuks des Transferetiketts oder
2) nach dem Aufbringen des Kohlenwasserstoffkautschuk-Transferetiketts auf den Spiegelbild-Barcode in einem separaten Schritt nach dem Vernetzen des Kohlenwasserstoffkautschuks,
f) Aufbringen eines Haftkleberabschnitts auf eine Stirnfläche des Kautschuk-Transferetiketts nach dem Vernetzungsschritt und nach dem Überführungsschritt des Barcodes, wobei die Fläche, auf welcher der Klebstoff aufgebracht wird, der Fläche, wo der Barcode transferiert wird, gegenüberliegt,
g) Aufbringen des Kohlenwasserstoffkautschuk-Transferetiketts mit dem Barcode und mit dem Film darauf mittels des Klebstoffs nach dem Aufbringen des Klebstoffs auf eine Oberfläche eines Grünreifens und
h) Aushärten des Grünreifens in einer Reifenaushärtpresse.

2. Verfahren nach Anspruch 1, wobei in dem Schritt f) als Haftvermittlerabschnitt zwei oder mehr diskontinuierliche Klebstoffabschnitte auf Basis von wärmehärtbarem Kohlenwasserstoffkautschuk mit einer Dicke von 0,0025 bis 0,13 cm auf die Stirnseite des Kautschuk-Transferetiketts aufgebracht werden.

3. Verfahren nach Anspruch 1 oder 2, des Weiteren umfassend den Schritt des Entfernens des Films von dem vernetzten Kautschuk-Transferetikett.

4. Verfahren nach Anspruch 1, 2 oder 3, **dadurch gekennzeichnet, dass** der Klebstoff durch Aufbringen des Klebstoffs auf einer Abziehschicht auf die dem Barcode gegenüberliegende Fläche des Kohlenwasserstoffkautschuk-Transferetiketts aufgebracht wird, und dass die Abziehschicht vor dem Aufbringen des Transferetiketts auf einen Grünreifen von dem vernetzten Kautschuktransferetikett abgetrennt wird.

5. Verfahren nach einem der vorhergehenden Ansprüche, **dadurch gekennzeichnet, dass** der eine oder die mehreren diskontinuierlichen Klebstoffabschnitte auf Basis von wärmehärtbarem Kohlenwasserstoffkautschuk wenigstens zwei Abschnitte pro Etikett sind.

6. Verfahren nach Anspruch 1, wobei das Kautschuk-Transferetikett aus einem nicht-schwarzen Kautschuk besteht.

7. Verfahren nach Anspruch 1, wobei der glatte Film ein Polyesterfilm ist.

8. Barcode-Etikett (11) für einen Reifen (10), wobei das Etikett noch nicht auf dem Reifen (10) befestigt ist, wobei das Etikett (11) umfasst:
a) eine Schicht aus vernetztem Kohlenwasserstoffkautschuk mit einer Dicke von 0,013 bis 0,13 cm und mit einem Modul bei 5 % Dehnung von 0,02 bis 1 MPa,
b) einen thermisch transferierten maschinenlesbaren Barcode mit einer kontrastierenden Farbe auf der Oberseite der vernetzten Kohlenwasserstoffkautschukschicht,
c) einen Haftvermittler auf der Unterseite der vernetzten Kohlenwasserstoffkautschukschicht und
d) einen entfernbaren oder während der Verwendung selbst ablösbaren glatten Film, welcher die Oberseite der vernetzten Kohlenwasserstoffkautschukschicht und den Barcode bedeckt, wasserstoffkautschukschicht und den Barcode bedeckt, wobei die Seite des Films, welche der Oberfläche der vernetzten Kohlenwasserstoffkautschukschicht gegenüberliegt, unter Verwendung einer Tinte auf Kautschukbasis mit einem Spiegelbild des Barcodes bedruckt worden ist, welches dann thermisch transferiert wird, um den maschinenlesbaren Barcode auszubilden.

9. Etikett nach Anspruch 8, des Weiteren enthaltend eine Abziehschicht.

10. Etikett nach Anspruch 9, wobei der Klebstoff ein Klebstoff auf Basis von thermisch vernetzbarem Kohlenwasserstoffkautschuk ist, welcher zwischen der Abziehschicht und der vernetzten Kohlenwasserstoffkautschukschicht angeordnet ist.

11. Etikett nach Anspruch 8, welcher wenigstens 10 phr eines Pigments auf Basis von Titandioxid enthält.

12. Etikett nach Anspruch 8, wobei die Tinte auf Kautschukbasis die Oberfläche der vernetzten Kohlenwasserstoffkautschukschicht teilweise durchdrungen hat.

13. Etikett nach Anspruch 8 oder 10, wobei der Klebstoff in kleinen diskreten Abschnitten auf die Unterseite der vernetzten Kohlenwasserstoffkautschukschicht aufgebracht wird, so dass der Klebstoff lediglich weniger als 30 % der Unterseite bedeckt.

## Revendications

1. Procédé pour fixer une étiquette (11) possédant un code-barres lisible par machine (12) sur un bandage pneumatique (10), le procédé comprenant le fait de :
a) imprimer une image spéculaire de droite à gauche d'un code-barres lisible par machine sur un film flexible avec une encre à base de caoutchouc, l'encre étant transférable à la chaleur depuis ledit film flexible jusqu'à un caoutchouc d'hydrocarbure réticulable ;
b) préparer une étiquette de décalcomanie en caoutchouc d'hydrocarbure réticulable ;
c) après les étapes a et b), fixer ledit code barre de l'image spéculaire et ledit film flexible sur la surface frontale de ladite étiquette de décalcomanie en caoutchouc ;
d) réticuler le caoutchouc d'hydrocarbure de ladite étiquette de décalcomanie en caoutchouc de telle sorte que son couple Mooney représente au moins 50 % du couple maximal du composé dans la courbe du curemètre de Mooney ;
e) transférer avec de la chaleur et transférer ledit code-barres de droite à gauche de l'image spéculaire sur ladite étiquette de décalcomanie en caoutchouc pour obtenir une décalcomanie de caoutchouc réticulé sur lequel est disposé à un code-barres de gauche à droite lisible par machine et ledit film par-dessus ledit code-barres, que ce soit
1) après avoir fixé ladite étiquette de décalcomanie en caoutchouc audit code-barres de l'image spéculaire et au cours de la même étape que le réticulation du caoutchouc d'hydrocarbure de ladite étiquette de décalcomanie ; ou
2) après avoir fixé ladite décalcomanie en caoutchouc d'hydrocarbure audit code-barres de l'image spéculaire dans une étape séparée suite à la réticulation dudit caoutchouc d'hydrocarbure ;
f) après l'étape de réticulation et après l'étape de décalcomanie du code-barres, fixer une portion adhésive sensible à la pression à la surface frontale de ladite étiquette de décalcomanie en caoutchouc, la face à laquelle est fixé ledit adhésif étant opposée à la face à laquelle est transféré le code-barres,
g) après la fixation dudit adhésif, fixer, via ledit adhésif, ladite étiquette de décalcomanie en caoutchouc d'hydrocarbure sur laquelle sont disposés le code-barres et ledit film, à une surface d'un bandage pneumatique à l'état cru ; et
h) vulcaniser ledit bandage pneumatique à l'état cru dans une presse de vulcanisation de bandage pneumatique.

2. Procédé selon la revendication 1, dans lequel, à l'étape f), à titre de portion adhésive sensible à la pression, on fixe deux portions adhésives discontinues thermodurcissables à base de caoutchouc d'hydrocarbure, possédant une épaisseur de 0,0025 à 0,13 cm, à ladite surface frontale de ladite étiquette de décalcomanie en caoutchouc.

3. Procédé selon la revendication 1 ou 2, comprenant en outre l'étape consistant à retirer ledit film de ladite étiquette de décalcomanie en caoutchouc réticulé.

4. Procédé selon la revendication 1, 2 ou 3, **caractérisé en ce que** ledit adhésif est fixé par application de l'adhésif sur une couche antiadhésive à la face de l'étiquette de décalcomanie en caoutchouc d'hydrocarbure, opposée audit code-barres, et dans lequel ladite couche antiadhésive est séparée de ladite décalcomanie en caoutchouc réticulé avant l'application dudit transfert à un bandage pneumatique à l'état cru.

5. Procédé selon l'une quelconque des revendications précédentes, **caractérisé en ce que** ladite ou lesdites une ou plusieurs portions discontinues d'adhésif à base de caoutchouc d'hydrocarbure thermodurcissables représentent au moins deux portions par étiquette.

6. Procédé selon la revendication 1, dans lequel ladite étiquette de décalcomanie en caoutchouc est un caoutchouc non noir.

7. Procédé selon la revendication 1, dans lequel ledit film flexible est un film en polyester.

8. Étiquette à code-barres (11) pour un bandage pneumatique (10), l'étiquette n'étant pas encore fixée au bandage pneumatique (10), dans laquelle l'étiquette (11) comprend :
a) une couche de caoutchouc d'hydrocarbure réticulé possédant une épaisseur de 0,013 à 0,13 cm et un module, à une déformation de 5 %, de 0,02 à 1 MPa ;
b) un code-barres lisible par machine, transféré par voie thermique, de couleurs contrastantes sur la surface supérieure de la couche en caoutchouc d'hydrocarbure réticulé ;
c) un adhésif sensible à la pression sur la surface inférieure de ladite couche de caoutchouc d'hydrocarbure réticulé ; et
d) un film flexible amovible ou autodétachable lors de l'utilisation, recouvrant la surface supérieure de ladite couche en caoutchouc d'hydrocarbure réticulé et dudit code-barres, le côté dudit film opposé à la surface supérieure de ladite couche en caoutchouc d'hydrocarbure réticulé ayant été préimprimé en utilisant une encre à base de caoutchouc, avec une image spéculaire dudit code-barres qui est alors soumise à un transfert par voie thermique pour obtenir ledit code-barres lisible par machine.

9. Étiquette selon la revendication 8, comprenant en outre une couche antiadhésive.

10. Étiquette selon la revendication 9, dans laquelle ledit adhésif est un adhésif à base de caoutchouc d'hydrocarbure réticulable par voie thermique, qui vient se disposer entre ladite couche antiadhésive et ladite couche en caoutchouc d'hydrocarbure réticulé.

11. Étiquette selon la revendication 8, comprenant un pigment à base de dioxyde de titane à concurrence d'au moins 10 phr.

12. Étiquette selon la revendication 8, dans laquelle l'encre à base de caoutchouc a pénétré en partie dans la surface supérieure de la couche en caoutchouc d'hydrocarbure réticulé.

13. Étiquette selon la revendication 8 ou 10, dans laquelle ledit adhésif est appliqué par petites portions discrètes sur la surface inférieure de ladite couche en caoutchouc d'hydrocarbure réticulé, si bien que l'adhésif recouvre seulement moins de 30 % de la surface inférieure.
